# EUROPÄISCHE PATENTSCHRIFT

(11) **EP 1 468 898 B1**
(45) Veröffentlichungstag und Bekanntmachung des Hinweises auf die Patenterteilung: **05.10.2011**
(21) Anmeldenummer: 04005218.5
(22) Anmeldetag: 05.03.2004
(51) Int. Cl.: B62D 5/04

(54) **System zur Verminderung der Lenkradstössigkeit bei einer Kraftfahrzeug-Lenkung**
System to reduce steering wheel shocks for an automotive steering system
Système d'amortissement des chocs de retour au volant d'un automobile

(30) Priorität: 19.04.2003 DE 10317991
(43) Veröffentlichungstag der Anmeldung: 20.10.2004
(73) Patentinhaber: Volkswagen Aktiengesellschaft, 38436 Wolfsburg (DE)
(72) Erfinder: Deppermann, Karl-Heinz, Dr., 38102 Braunschweig (DE); Apel, Andreas, Dr., 38228 Salgitter (DE); Brosig, Stefan, 29386 Hankensbüttel (DE)

(56) Entgegenhaltungen:
- EP-A- 0 416 263
- WO-A-2004/031022
- DE-C1- 19 644 528
- US-A- 5 333 700
- US-A1- 2003 019 687
- US-B1- 6 219 603

## Beschreibung

Die Erfindung bezieht sich auf ein System zur Verminderung der Lenkradstößigkeit bei einer Kraftfahrzeug-Lenkung.

Bei herkömmlichen Kraftfahrzeugen sind die gelenkten Vorderräder mechanisch mit dem Lenkrad gekoppelt. Dies hat zufolge, daß auf die Vorderräder einwirkende Stöße über die Lenkung auf das Lenkrad Kraftfahrzeugs übertragen werden.

Aus dem Stand der Technik ist es allgemein bekannt, an der Lenkung Lenkungsdämpfer vorzusehen, welche die Stöße mindern sollen. Herkömmliche Systeme arbeiten zumeist passiv, d. h. sie sind nach ihrem Einbau von außen nicht mehr beeinflußbar. So wird beispielsweise in der DE 195 23 568 C2 eine Servolenkung vorgeschlagen, bei der im Lenkgestänge stoßdämpfende Einrichtungen in Form von Blattfedern und Anschlägen vorgesehen sind.

Weiterhin ist aus der DE 196 44 528 C1 ein Lenkungsdämpfer bekannt, der eine aktive Stoßdämpfung ermöglicht, indem beim Auftreten eines Stoßes die Dämpfungskraft während einer der Stoßdauer entsprechenden Zeitspanne auf einen sehr hohen Wert verstellt wird. Die entsprechende Signalgenerierung zur Erhöhung der Dämpfung erfolgt über spezielle Stoßsensoren, die an radnahen Lenkgetriebeelementen angeordnet sind. Als Stoßsensoren werden beispielsweise Trägheitssensoren mit in Axialrichtung empfindlicher Sensorik verwendet. Diese aktivieren verzögerungsarme Lenkungsdämpferelemente für einen kurzen Zeitraum, und zwar bevor sich der Stoß bis zu diesen Lenkungsdämpfungselementen ausgewirkt hat. Nach einem Stoß wird die Dämpfung sofort wieder vermindert. Die Erhöhung der Dämpfung ist dabei unabhängig vom Verhalten des Fahrers.

Für die Funktion der Stoßdämpfung ist folglich eine sehr schnelle Signalübertragung erforderlich. Zudem werden separate Stoßsensoren für die Erfassung eines Stoßes benötigt. Dementsprechend ist die aus der DE 196 44 528 C1 bekannte Lösung zur Verminderung der Lenkradstößigkeit technisch sehr aufwendig.

Ferner ist aus der JP 11 321689 A1 eine Fahrzeuglenkung bekannt, bei der durch Seitenwind oder Fahrbahnneigung verursachte Lenkabweichungen über einen Servomotor der Lenkung kompensiert werden. Dazu wird in Abhängigkeit eines sensorisch erfassten Störmoments ein Kompensationsmoment ermittelt und durch Aufschaltung auf die Führungsgröße des Lenkmoments über den Servomotor dargestellt. Anhand des Phasenverlaufs der Eingangswelle und der Ausgangswelle wird erkannt, ob Störmomente von der Radseite vorliegen.

Vor diesem Hintergrund liegt der Erfindung die Aufgabe zugrunde, eine technische einfachere Alternative zur aktiven Verminderung der Lenkradstößigkeit anzuheben.

Diese Aufgabe wird gelöst durch ein System zur Verminderung der Lenkradstößigkeit bei einer Kraftfahrzeug-Lenkung gemäß Patentanspruch 1 gelöst. Das System umfasst eine Sensoreinrichtung zur Erfassung eines Lenkradwinkels, eine Sensoreinrichtung zur Erfassung eines Radstellungswinkels, und eine Auswerteeinrichtung zur Auswertung des zeitlichen Verlaufs der erfassten) Winkel, die derart konfiguriert ist, um zwischen dem Verlauf des Lenkradwinkels und dem Verlauf des Radstellungswinkels eine Phasenverschiebung zu ermitteln und bei einem Voreilen des Radstellungswinkels ein Stellsignal zur Dämpfungserhöhung in der Kraftfahrzeug-Lenkung zu erzeugen.

Hierbei wird die Erkenntnis genutzt, dass in einem Fahrzustand, in dem der Fahrer gerade keinen aktiven Lenkeingriff vornimmt, auf die Lenkung wirkende Stöße zunächst im radnahen Bereich z. B. am Lenkgestänge oder am Lenkgetriebe wirksam werden, bevor sie sich am Lenkrad bemerkbar machen. Der sensorisch erfasste Phasenunterschied zwischen dem Lenkradwinkel und dem Radstellungswinkel zeigt an, ob die an der Lenkung angreifenden Kräfte zuerst von den Rädern oder zuerst vom Lenkrad ausgehen. Eilen die Signale des Radstellungswinkels vor, so wird auf das Vorliegen eines Stoßes geschlossen und dementsprechend über die Generierung eines Stellsignals die Dämpfung in der Lenkung kurzzeitig erhöht. Im umgekehrten Fall kann das normale Dämpfungsniveau beibehalten werden.

Bei Fahrzeugen, die mit einem elektronischen Stabilitätprogramm (ESP) ausgerüstet sind, wird üblicherweise der Lenkradwinkel als Eingangsgröße benötigt. Ist an dem Fahrzeug zudem eine Lenkung mit elektromechanischer Lenkunterstützung vorgesehen, so wird dort eine den Radstellungswinkel repräsentierender Größe benötigt.

Die vorliegende Erfindung nutzt diese am Fahrzeug zur Verfügung stehenden Informationen in vorteilhafter Weise zur Ermittlung eines etwaigen Phasenunterschieds zwischen dem Lenkradwinkel und dem Radstellungswinkel zur Verminderung der Lenkradstößigkeit aus. In diesem Fall sind am Fahrzeug keine zusätzlichen Sensoren anzubringen. Vielmehr wird die ohnehin vorhandene Sensorik mit einem Zusatznutzen versehen.

Dadurch läßt sich mit einem sehr geringen Aufwand einen Komfortgewinn bei unebener Fahrbahn erzielen.

Die Signale der Sensoreinrichtungen für die Auswerteeinrichtung, die mit hoher Präzision vorliegen müssen, können sowohl analog als auch digital zur Verfügung gestellt werden.

Das zeitliche Voreilen des Radstellungswinkels wird statistisch durch eine Korrelationsmessung zwischen den beiden Winkelverläufen in bezug auf die Voreil- bzw. Nacheilzeit des Radstellungswinkels anhand des Maximums der Korrelation detektiert. Liegt das Maximum des Korrelationskoeffizienten im Bereich einer Voreilzeit, so wird die Dämpfung erhöht, und zwar vorzugsweise solange, wie dieser Zustand anhält.

In einer weiteren, vorteilhaften Ausgestaltung weist die Lenkung zur Lenkunterstützung einen Servomotor mit einem Rotor auf. Die Sensoreinrichtung zur Erfassung des Radstellungswinkels greift dann vorzugsweise die Winkelstellung des Rotors ab. Dabei kann außerdem zusätzlich die Drehzahl des Rotors erfaßt und in der Auswerteeinrichtung für die Stellsignalgenerierung mitausgewertet wird.

Allerdings kann der Radstellungswinkel auch an anderer Stelle und unabhängig von einer elektrischen Servoeinrichtung radnah erfaßt werden. Prinzipiell kann hierzu auch ein eigener Sensor vorgesehen werden. Dies gilt analog auch für den Fall der Lenkradwinkelerfassung, die nicht notwendigerweise im Zusammenhang mit einem elektronischen Stabilitätsprogramm erfolgen muß.

Die Erhöhung der Dämpfung erfolgt beispielsweise über einen zuschaltbaren Lenkungsdämpfer, der durch das Stellsignal aktivierbar und deaktivierbar ist.

Denkbar ist darüber hinaus, in Abhängigkeit der ermittelten Voreilzeit und/oder in Abhängigkeit der in einem solchen Fall erfaßten Radstellungswinkelamplituden ein entsprechend vorgegebenes Dämpfungsniveau einzustellen. Hierdurch läßt sich eine optimale Dämpfungswirkung erzielen.

Nachfolgend wird die Erfindung anhand eines in der Zeichnung dargestellten Ausführungsbeispiels näher erläutert. Die Zeichnung zeigt in:

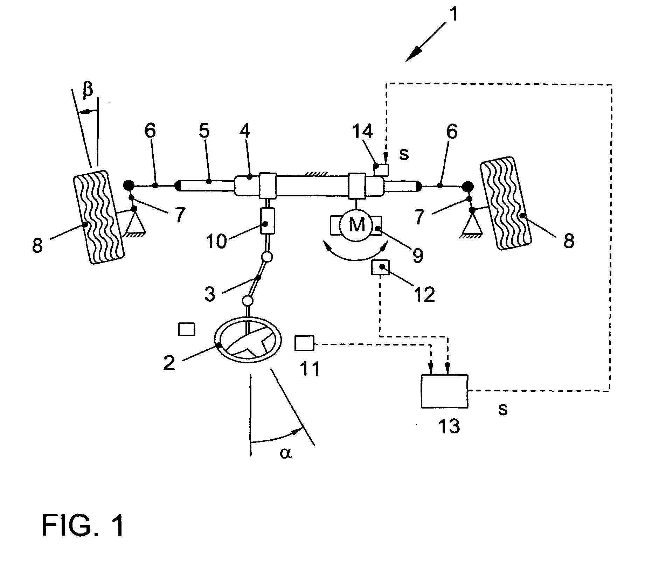

- Figur 1: eine Lenkung für ein Kraftfahrzeug mit einem System zur Verminderung der Lenkradstößigkeit nach der Erfindung in schematischer Darstellung,
- Figur 2: ein Diagramm zur Veranschaulichung des Kennlinienverlaufs eines Lenkradwinkels und eines Radstellungswinkel,
- Figur 2a: ein weiteres Diagramm zur Veranschaulichung des Kennlinienverlaufs eines Lenkradwinkels und eines Radstellungswinkels bei impulsartigen Stoßbedingungen,
- Figur 3: einen Blockschaltbild des erfindungsgemäßen Systems zur Verminderung der Lenkradstößigkeit aus Figur 1,
- Figur 4: ein Diagramm zur Veranschaulichung des Kennlinienverlaufs eines Lenkradwinkels und eines Radstellungswinkel bei einem passiven Fahrer und unebener Fahrbahn sowie ein Diagramm für die zugehörige Kreuzkorrelation zwischen dem Lenkradwinkel und dem Radstellungswinkel in bezug auf die Voreilzeit des Radstellungswinkels,
- Figur 5: eine Darstellung entsprechend Figur 4 bei einem aktiven Lenkeingriff des Fahrers auf unebener Fahrbahn, und in
- Figur 6: eine Darstellung entsprechend Figur 4 bei einem aktiven Lenkeingriff des Fahrers auf im wesentlichen ebener Fahrbahn.

Das in den Figuren dargestellte Ausführungsbeispiel zeigt eine Lenkung 1 eines Kraftfahrzeugs. Die Lenkung umfaßt ein Lenkrad 2, das über eine Lenkspindel 3 mit einem Lenkgetriebe 4 mechanisch gekoppelt ist. Ein am Lenkrad 2 eingebrachter Lenkbefehl wird über die Lenkspindel 3 und das Lenkgetriebe 4 auf eine Zahnstange 5 übertragen, die ihrerseits mit Spurstangen 6 gekoppelt ist. Die Spurstangen 6 greifen jeweils an einem Radträger 7 an, der ein Fahrzeugrad 8 lagert.

Die Lenkung 1 weist weiterhin einen elektrischen Servomotor 9 zur Lenkunterstützung auf. Zur Erfassung des Moments in der Lenkung, in Abhängigkeit dessen der Servomotor 9 angesteuert wird, dient einen Torsionssensor 10 in der Art eines Torsionsstabs, der in die Lenkspindel 3 eingegliedert ist.

Weiterhin ist an der Lenkung ein System zur Verminderung der Lenkradstößigkeit vorgesehen. Dieses umfaßt eine Sensoreinrichtung 11 zur Erfassung eines Lenkradwinkels α sowie eine Sensoreinrichtung 12 zur Erfassung eines Radstellungswinkels β. Diese Sensoreinrichtungen 11 und 12 können in herkömmlicher Art und Weise ausgebildet sein.

Bei dem hier dargestellten Ausführungsbeispiel ist die Sensoreinrichtung 11 in ein elektronisches Stabilitätsprogramm (ESP) integriert. Für das System zur Verminderung der Lenkradstößigkeit wird dann lediglich die entsprechende Information aus dem elektrischen Stabilitätsprogramm abgegriffen.

In entsprechender Weise wird hier der Radstellungswinkel β aus einer Steuerung der elektromechanischen Lenkunterstützung, d. h. der Ansteuerung des Servomotors 9 abgegriffen. Die entsprechende Sensoreinrichtung 12 ist dabei an dem Servomotor 9 vorgesehen und erfaßt die Stellung eines Rotors desselben. Zusätzlich kann auch die Drehzahl des Rotors erfaßt und dem System zur Verminderung der Lenkradstößigkeit zur Verfügung gestellt werden. Die Rotorstellung repräsentiert dabei den Radstellungswinkel β.

In einer Abwandlung des Ausführungsbeispiels kann zur Erfassung des Radstellungswinkels β eine im Bereich der Radträger 7 oder der Spurstangen 6 angeordnete Sensoreinrichtung 12 zum Einsatz kommen. Durch die radnähere Anordnung werden durch Fahrbahnunebenheiten verursachte Stöße noch etwas früher wahrgenommen und der Einfluß des Übertragungsverhaltens zwischen den Rädern 8 und dem Servomotor 9 verringert.

Das System zur Verminderung der Lenkradstößigkeit umfaßt weiterhin eine Auswerteeinrichtung 13, die den zeitlichen Verlauf der erfaßten Signale bzw. der erfaßten Winkel auswertet. Die Auswerteeinrichtung 13 ist derart konfiguriert, um zwischen dem Verlauf des Lenkradwinkels α und dem Verlauf des Radstellungswinkels β eine Phasenverschiebung zu ermitteln und bei einem Voreilen des Radstellungswinkels β ein Stellsignal s zur Dämpfungserhöhung in der Kraftfahrzeug-Lenkung zu erzeugen.

Alternativ oder ergänzend können für die Generierung des Stellsignals s die Änderungsgeschwindigkeiten für den Lenkradwinkel α und den Radstellungswinkel β ausgewertet werden.

Das Stellsignal s wird dann einem nicht näher dargestellten Lenkungsdämpfer 14 der Lenkung zugeführt, der durch dieses aktiviert bzw. deaktiviert wird. Auf diese Weise läßt sich für einen Stoß die Dämpfung in der Lenkung temporär erhöhen. In einer weiteren Abwandlung des Ausführungsbeispiels kann die Dämpfung durch das Stellsignal auch quantitativ beeinflußt werden. Das Ausmaß der Dämpfung läßt sich dann in Abhängigkeit der Voreilzeit des Radstellungswinkels β und/oder der Amplituden des Radstellungswinkel β einstellen.

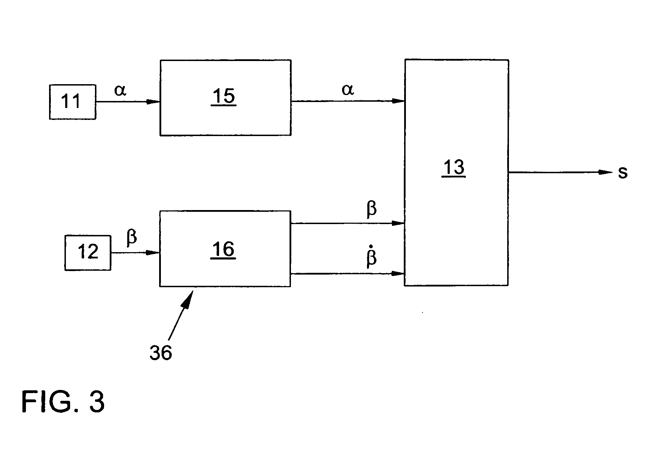

Figur 3 zeigt ein Blockschaltbild des Systems. Die Sensoreinrichtung 11 übermittelt dabei den Lenkradwinkel α repräsentierende Signale an eine Steuereinrichtung 15, in welche das elektronische Stabilitätsprogramm (ESP) implementiert ist. In entsprechender Weise übermittelt die Sensoreinrichtung 12 den Radstellungswinkel β repräsentierende Signale in einer Steuereinrichtung 16 für die elektromechanische Lenkunterstützung. Die entsprechenden Informationen werden dann gegebenenfalls modifiziert an die Auswerteeinrichtung 13 übertragen, in welcher in weiter unten noch näher erläutert Art und Weise das Stellsignal s generiert wird. Alternativ hierzu können die von einer oder beiden Sensoreinrichtungen 11 und 12 erzeugten Signale auch direkt an die Auswerteeinrichtung 13 übermittelt werden.

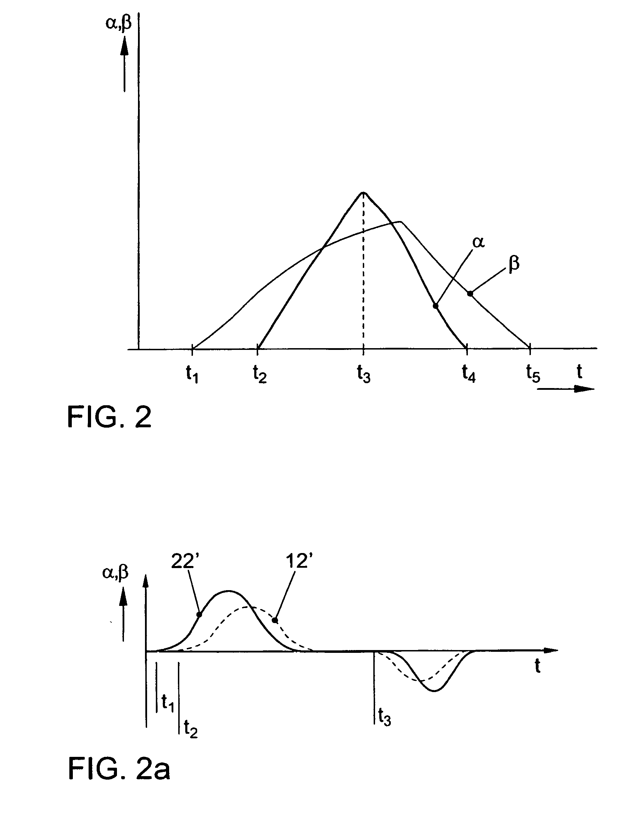

Der zeitliche Zusammenhang zwischen dem Lenkradwinkel α und dem Radstellungswinkel β im Falle eines radseitigen Stoßes ist in den Figuren 2 und 2a beispielhaft dargestellt. Hierbei tritt zunächst eine Änderung des Radstellungswinkels β auf, die in Figur 2 zum Zeitpunkt t₁ einsetzt. Aufgrund der mechanischen Kopplung kommt es erst mit einer Zeitverzögerung zum Zeitpunkt t₂ zur einer Änderung des Lenkradwinkels. Ursache für die Zeitverzögerung sind die in der Übertragungskette vorhandenen Trägheiten, Elastizitäten, eventuell vorhandenes Spiel sowie Dämpfungseffekte.

Nach einer Reaktionszeit des Fahrers kommt es zum Zeitpunkt t₃ zu einer Gegenreaktion, nämlich einem Gegenlenken, um die ursprüngliche Fahrtrichtung wieder herzustellen. Zumindest bis zu diesem Zeitpunkt t₃ eilt der Radstellungswinkel β dem Lenkradwinkel α voraus, so daß im Kurvenverlauf eine Phasenverschiebung zu beobachten ist.

Die vom Fahrer veranlaßte Korrektur endet zum Zeitpunkt t₄. Hier tritt nun aus den oben bereits geschilderten Gründen wiederum eine Zeitverzögerung auf, so daß sich der ursprüngliche Radstellungswinkel β erst zu einem späteren Zeitpunkt t₅ wieder eingestellt.

Figur 2a zeigt den Fall einer fahrerseitigen Überregelung, die bei sehr kurzem, impulsartigen Stößen auftreten kann. Auch hier ist wieder eine durch den Stoß verursachte Phasenverschiebung zu beobachten, wobei anfangs der Radstellungswinkel β dem Lenkradwinkel α voreilt.

Das zeitliche Voreilen des Radstellungswinkels β kann statistisch durch eine Korrelationsmessung zwischen den beiden Winkelverläufen in bezug auf die Voreil- bzw. Nacheilzeit ermittelt werden. Dazu wird das Maximum der Korrelation bestimmt. Liegt dieses im Bereich der Voreilzeit für den Radstellungswinkel β, so wird die Dämpfung in der Lenkung zeitweilig erhöht. Andernfalls wird eine Erhöhung nicht vorgenommen.

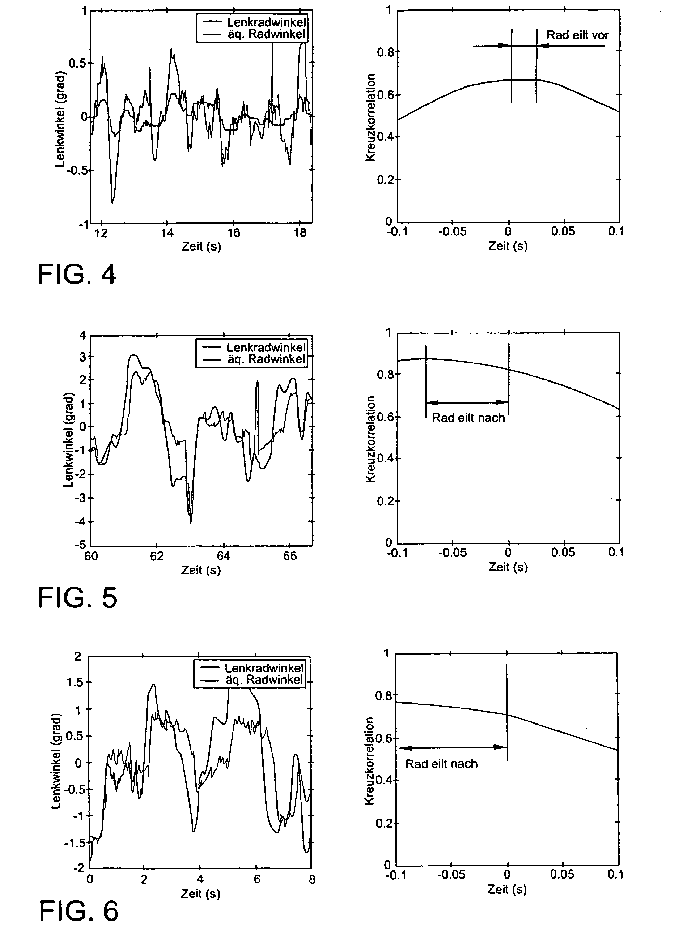

Die Figuren 4 bis 6 zeigen nun verschiedenen Zustände, wobei jeweils in dem linken Diagramm der Verlauf des Lenkradlenkers α und des Radstellungswinkel β normiert über der Zeit aufgetragen ist. Das rechte Diagramm stellt die zugehörige Kreuzkorrelation über der Zeit dar.

Bei dem in Figur 4 dargestellten Winkelverlauf ist der Fahrer passiv, d. h. er gibt keinen Lenkimpuls ab. Als Folge hiervon bewegen die Fahrbahnunebenheiten das Lenkrad. Dabei ist ein Nachlaufen des Lenkradwinkels α zu beobachten. Zudem bleiben die normierten Winkelausschläge kleiner als an der Radseite. Im Korrelationsdiagramm zeigt sich dementsprechend ein Maximum im Bereich der Voreilzeit des Radstellungswinkels β. In diesem Fall wird folglich die Auswerteeinrichtung 13 ein Stellsignal 11 zur Erhöhung der Dämpfung generieren.

Figur 5 zeigt einen aktiven Lenkungseingriff durch den Fahrer, wobei hier Fahrbahnunebenheiten überlagert sind. Der Radstellungswinkel β eilt dem Lenkradwinkel α nach, so daß das Korrelationsmaximum im Bereich der Nacheilzeit liegt. In diesem Fall wird durch die Auswerteeinrichtung 13 die Dämpfung nicht erhöht.

Figur 6 zeigt eine Figur 5 entsprechende Situation, bei der der Fahrer ebenfalls aktiv lenkt, die Fahrbahnunebenheiten jedoch deutlich geringer sind. Im Korrelationsdiagramm führt dies zu einem zu größeren Nacheilzeiten verschobenen Maximum, so daß auch hier die Auswerteeinrichtung 13 die Dämpfung nicht erhöht.

Bei einem aktiv lenkenden Fahrer behindert somit keine zusätzliche Dämpfung das Lenkverhalten.

Ein weiterer Vorteil der Erfindung besteht darin, daß die Abstimmung der Lenkung bezüglich der Dämpfung nicht über eine Teststrecke mit verschiedenen Welligkeiten und Stößigkeiten durchgeführt werden muß. Vielmehr paßt sich die Lenkung sowohl der Fahrbahn als auch dem Lenkverhalten des Fahrers an.

Die Erfindung wurde vorstehend anhand eines Ausführungsbeispiels lediglich beispielhaft erläutert. Sie ist jedoch nicht auf dieses Ausführungsbeispiel beschränkt, sondern umfaßt vielmehr alle durch die Patentansprüche definierten Ausgestaltungsformen.

### BEZUGSZEICHENLISTE

- 1: Lenkung
- 2: Lenkrad
- 3: Lenkspindel
- 4: Lenkgetriebe
- 5: Zahnstange
- 6: Spurstange
- 7: Radträger
- 8: Rad
- 9: Servomotor
- 10: Torsionssensor
- 11: Sensoreinrichtung für den Lenkradwinkel α
- 12: Sensoreinrichtung für den Radstellungswinkel β
- 13: Auswerteeinrichtung
- 14: Lenkungsdämpfer
- 15: Steuereinrichtung für ein elektronisches Stabilitätsprogramm (ESP)
- 16: Steuereinrichtung für eine elektromechanischen Lenkunterstützung
- α: Lenkradwinkel
- β: Radstellungswinkel
- s: Stellsignal
- t: Zeit

## Patentansprüche

1. System zur Verminderung der Lenkradstößigkeit bei einer Kraftfahrzeug-Lenkung, umfassend:
- eine Sensoreinrichtung (11) zur Erfassung eines Lenkradwinkels (α),
- eine Sensoreinrichtung (12) zur Erfassung eines Radstellungswinkels (β), und
- eine Auswerteeinrichtung (13) zur Auswertung des zeitlichen Verlaufs der erfaßten Winkel (α, β), die derart konfiguriert ist, um zwischen dem Verlauf des Lenkradwinkels (α) und dem Verlauf des Radstellungswinkels (β) eine Phasenverschiebung zu ermitteln,
**dadurch gekennzeichnet, daß**
bei einem Voreilen des Radstellungswinkels (β) über ein Stellsignal (s) die Dämpfung in der Kraftfahrzeug-Lenkung (1) erhöht wird, und
das zeitliche Voreilen des Radstellungswinkels (β) statistisch durch eine Korrelationsmessung zwischen den beiden Winkelverläufen in bezug auf die Voreil- bzw. Nacheilzeit anhand des Maximums der Korrelation detektiert wird.

2. System nach Anspruch 1, **dadurch gekennzeichnet, daß** der Lenkradwinkel (α) aus einem elektrischen Stabilitätsprogramm (ESP) abgegriffen wird.

3. System nach einem der Ansprüche 1 oder 2, **dadurch gekennzeichnet, daß** der Radstellungswinkel (β) aus einer Steuerung einer elektromechanischen Lenkunterstützung abgegriffen wird.

4. System nach einem der Ansprüche 1 bis 3, **dadurch gekennzeichnet, daß** die Lenkung zur Lenkunterstützung einen Servomotor (9) mit einem Rotor aufweist und die Sensoreinrichtung (12) zur Erfassung des Radstellungswinkels (β) die Winkelstellung des Rotors erfaßt.

5. System nach Anspruch 4, **dadurch gekennzeichnet, daß** zusätzlich die Drehzahl des Rotors erfaßt und in der Auswerteeinrichtung (13) für die Stellsignalgenerierung mitausgewertet wird.

6. System nach einem der Ansprüche 1 bis 5, **dadurch gekennzeichnet, daß** die Lenkung (1) einen zuschaltbaren Lenkungsdämpfer (14) aufweist, der durch das Stellsignal (s) aktivierbar ist.

## Claims

1. System for reducing the steering wheel shocks in a motor vehicle steering system, comprising:
- a sensor device (11) for sensing a steering angle (α),
- a sensor device (12) for sensing a wheel position angle (β), and
- an evaluation device (13) for evaluating the time profile of the sensed angles (α, β) which is configured in such a way that it determines a phase shift between the profile of the steering wheel angle (α) and the profile of the wheel position angle (β),
**characterized in that**
in the case of leading of the wheel position angle (β) the damping in the motor vehicle steering system (1) is increased by means of an actuation signal (s), and the temporal leading of the wheel position angle (β) is detected statistically by means of a correlation measured between the two angular profiles with respect to the lead time or lag time by means of the maximum value of the correlation.

2. System according to Claim 1, **characterized in that** the steering wheel angle (α) is tapped from an electrical stability programme (ESP).

3. System according to one of Claims 1 or 2, **characterized in that** the wheel position angle (β) is tapped from a controller for an electro-mechanical steering assistance system.

4. System according to one of Claims 1 to 3, **characterized in that** the steering system for providing steering assistance has a servo motor (9) with a rotor, and the sensor device (12) senses the angular position of the rotor in order to sense the wheel position angle (β).

5. System according to Claim 4, **characterized in that** the rotational speed of the rotor is additionally sensed and is also evaluated in the evaluation device (13) for the generation of the actuation signals.

6. System according to one of Claims 1 to 5, **characterized in that** the steering system (1) has a steering damper (14) which can be activated by means of the actuation signal (s).

## Revendications

1. Système pour réduire la sensation d'à-coup du volant dans une direction de véhicule automobile, comprenant :
- un dispositif de détection (11) pour détecter un angle de volant (α),
- un dispositif de détection (12) pour détecter un angle de position des roues (β),
- un dispositif d'interprétation (13) pour interpréter la courbe dans le temps des angles (α, β) détectés, lequel est configuré pour déterminer un déphasage entre la courbe de l'angle de volant (α) et la courbe de l'angle de position des roues (β), **caractérisé en ce que**
en présence d'une avance de l'angle de position des roues (β), l'amortissement dans la direction du véhicule automobile (1) est augmenté par le biais d'un signal de commande (s) et
l'avance dans le temps de l'angle de position des roues (β) est détectée statistiquement par une mesure de corrélation entre les deux courbes d'angle en référence au temps d'avance ou au temps de retard, au moyen du maximum de la corrélation.

2. Système selon la revendication 1, **caractérisé en ce que** l'angle de volant (α) est prélevé d'un programme de stabilité électrique (ESP).

3. Système selon l'une des revendications 1 ou 2, **caractérisé en ce que** l'angle de position des roues (β) est prélevé d'une commande d'une assistance électromécanique à la direction.

4. Système selon l'une des revendications 1 à 3, **caractérisé en ce que** la direction présente, pour l'assistance à la direction, un servomoteur (9) muni d'un rotor et le dispositif de détection (12) pour détecter l'angle de position des roues (β) détecte la position angulaire du rotor.

5. Système selon la revendication 4, **caractérisé en ce que** la vitesse de rotation du rotor est en plus détectée et interprétée conjointement dans le dispositif d'interprétation (13) pour la génération du signal de commande.

6. Système selon l'une des revendications 1 à 5, **caractérisé en ce que** la direction (1) présente un amortisseur de direction (14) activable qui peut être activé par le signal de commande (s).
